# EUROPEAN PATENT APPLICATION

(11) **EP 4 464 162 A1**
(43) Date of publication of application: **20.11.2024**
(21) Application number: 24166927.4
(22) Date of filing: 27.03.2024
(51) Int. Cl.: A23B 7/16, A23B 7/154, A23B 4/10, A23B 4/20, A23B 5/06, A23B 5/14, A23B 9/14, A23B 9/26, A23L 3/3463, A23L 3/3472

(54) **COMPOSITIONS FOR EXTENDING THE SHELF LIFE OF A FOOD PRODUCT, METHOD FOR PRODUCING THE COMPOSITIONS, USES THEREOF**

(30) Priority: 19.05.2023 IT 202300010242
(71) Applicant: Agree NET S.r.l., 10122 Torino (IT)
(72) Inventor: GONZALEZ FLORES, Gustavo Adolfo, I-10141 Torino (IT); MASANTE, Irene, I-14024 Moncucco Torinese (AT) (IT); FERIOLI, Stefano, I-10141 Torino (IT)
(74) Representative: Buzzi, Notaro & Antonielli d'Oulx S.p.A.

(57) **Abstract**

Composition for prolonging the shelf life of a food product comprising: a matrix comprising at least one curable compound, at least one essential oil as an antimicrobial agent, and at least one compound selected from initiator and catalyst compounds.

## Description

### Invention field

The disclosure relates to compositions for prolonging the shelf life of a food product, the process for producing the compositions, and uses thereof.

### Background of the invention

The increasing industrialization of the food market, in particular fruit and vegetables, has led to the search for innovative solutions to ensure that exported and imported fresh produce arrives in suitable conditions for distribution and sale in the destination area. To meet the growing global, European and Italian demand for fruit and vegetables, alternative solutions are required to increase and optimise the shelf-life of these food products. Furthermore, if an adequate shelf life is guaranteed, economic losses related to food waste can be significantly reduced, as well as the environmental impact related to waste generation.

One of the methods utilized to increase the durability of food conservation, such as fruits and vegetables, is to pack them in a closed and controlled environment where inert components, such as nitrogen are added. Although these techniques are well known and work for some fruits, the result is sometimes not satisfactory, especially when it comes to rapidly perishable fruits or when the product must be shipped to distant destinations. Currently, one of the main consumer demands is to reduce the use of chemically synthesised additives in food packaging. Therefore, the interest in the use of natural substances appears as one of the promising strategies to maintain the freshness of fresh products for longer periods, reducing microbiological spoilage and guaranteeing the safety and preservation of the organoleptic characteristics of the product.

Volatile active constituents of plant essential oils, for example, have been studied for their antimicrobial activity against many microorganisms, including several pathogens. In fact, they are used as functional components in the medical sector to inhibit the proliferation of pathogens in medical devices. Plant essential oils are natural and biodegradable substances with antioxidant and antimicrobial properties and thus represent a promising alternative to classical chemical compounds and fungicides used as food additives for packing fruit and vegetable without leaving residues on the surface of fresh produce and without exerting side effects.

Although the antibacterial effect of natural essential oils against various microorganisms is known, their incorporation as additives for food packaging applications, particularly for fruit and vegetable preservation, is still in the research and development phase. The main problem in the use of essential oils concerns their rapid and uncontrollable rate of volatilisation. In order for the antibacterial effect to be prolonged over time allowing the constant maintenance of fruit and vegetables in a stable atmosphere of essential oil gases, they must have a slow and uniform volatilization rate, and in a controlled and/or closed environment. Further critical issues related to the use of essential oils are their poor solubility in most matrices used for food packaging applications; they are also highly sensitive to light and heat.

To date, some technical solutions developed in order to overcome the aforementioned drawbacks are known; document CN113907240A, for example, discloses the encapsulation of a mixture of essential oils in granules consisting of chitosan in which compounds such as titanium dioxide and manganese-potassium are used to promote the homogenisation of the mixture. The mixing process disclosed in such document takes quite a long time, at least one day, to obtain the aforementioned granules, which are then sealed in paper and/or plastic bags and glued onto a self-adhesive material in order to obtain a slow-release tag of the essential oil mixture. On the other hand, document CN110055820A discloses a process for preparing a material for making wrappers or films based on compounds such as β-cyclodextrin used to encapsulate and slow down the volatilisation of essential oils, e.g. cinnamon. The resulting material is then mixed with a starchbased solution and an ionised salt to produce a liquid used to coat the inner surface of food packaging. Document US2020/360889A discloses a method for the preparation of degradable poly (beta-amino) ester microcapsules containing essential oils by interfacial polymerisation. Such microcapsules are synthesised through an addition reaction of amine functions on acrylic functions, also known as 'aza-Michael addition'.

The aforementioned techniques - although designed to prolong the effect of essential oils and thus the shelf life of a food product - have the disadvantage of being complex and requiring long production times for the final product.

### Summary of the invention

The object of the present disclosure is to provide a composition for prolonging the shelf life of a food product that overcomes the disadvantages of known technical solutions.

The object is achieved by the subject-matter specifically recalled in the following claims, which are intended to form an integral part of the present disclosure.

One or more embodiments of the present disclosure provide a polymeric composition for prolonging the shelf life of a food product, said composition comprising:
a) a matrix including at least one curable compound,
b) at least one essential oil as an antimicrobial agent dispersed in said matrix,
c) at least one initiator compound and/or at least one catalyst compound.

The at least one initiator compound may be selected from the group consisting of photoinitiator compounds, thermoinitiator compounds, and combinations thereof.

The at least one catalyst compound may be selected from the group consisting of strong bases, metals, organometallic compounds, Lewis acids, and combinations thereof.

In one or more embodiments, the at least one curable compound is a compound that can react via a free radical mechanism, via a thiol-Michael addition mechanism, and/or via an ionic (cationic and anionic) polymerisation mechanism.

In particular, the at least one curable compound, which may react via a free radical mechanism, may be selected from the group consisting of:
- compounds comprising at least one (meth)acrylate functional group, wherein preferably said (meth)acrylate functional group comprises acrylate groups (H₂C=CH-C(=O)-) and/or methacrylate groups (H₂C=CH(CH₃)-C(=O)-),
- compounds comprising at least one thiol functional group (HS-).

When the at least one curable compound is a compound comprising at least one thiol functional group (HS-), the composition may comprise at least one further curable compound selected from the group consisting of:
- a compound comprising at least one functional group having a carbon-carbon double bond (alkene), preferably a vinyl functional group (H₂C=CH-), such combination being identified in this disclosure as a "thiol-ene type system".
- a compound comprising at least one functional group having a carbon-carbon triple bond (alkyne), for example propargyl groups (HC=C-CH₂-). Such a combination is identified in this disclosure as a "thiol-yne type system".

In the case where the composition comprises at least one compound comprising at least one thiol functional group (HS-) in combination with at least one compound comprising at least one functional group exhibiting a carbon-carbon double bond (alkene), thiol-ene reaction, or in combination with at least one compound comprising at least one functional group exhibiting a carbon-carbon triple bond (alkane), thiol-yne reaction, the polymerisation of the curable compounds may occur by thiol Michael addition mechanisms without a radical initiator compound. A catalyst compound, preferably selected from the group consisting of strong nucleophilic type bases characterised by the presence of primary and/or secondary amine groups, may be employed to initiate the thiol Michael polymerisation reaction.

In one or more embodiments, the composition may comprise at least one compound curable by an ionic (cationic and anionic) polymerisation mechanism. Such a curable compound may be selected from the group consisting of compounds that include at least one functional group having a heterocycle, preferably oxirane or oxetane, and compounds comprising at least one carbon-carbon double bond (alkene), preferably at least one vinyl group (H₂C=CH-).

The matrix of the disclosed compositions may comprise combinations of curable compounds, in particular combinations of photocurable and/or thermocurable compounds, depending on the initiator compound employed. The process for producing such compositions will comprise different types of polymerisations, in particular photopolymerisation and thermopolymerisation in sequence or in parallel, so as to produce compositions comprising "hybrid" polymeric matrices.

The composition may comprise at least one curable compound in an amount between 40% and 99.7% by weight of the composition.

The essential oil may be included in the composition in an amount by weight of between 0.1% and 50% relative to the weight of the at least one curable compound.

The composition may comprise at least one initiator compound preferably selected from the group consisting of photoinitiator compounds, thermoinitiator compounds, and combinations thereof in an amount by weight of between 0.2% and 15% relative to the weight of the composition.

The at least one initiator compound may be selected from the group consisting of Norrish type I compounds, Norrish type II compounds, and combinations thereof, preferably for curable compounds that polymerise via radical-type mechanisms.

In one or more embodiments, for ionic polymerisation systems, the initiator compound is preferably cationic and may be used in combination with the curable compound to activate the cation-type photopolymerisation reaction.

The composition may comprise at least one catalyst compound, a strong amine-type base, in an amount of between 5% and 50% by weight of the composition, preferably for thiol-ene and/or thiol-yne reaction systems.

The composition may further comprise at least one synergising compound, said compound preferably comprising at least one amine group (NH-). The at least one synergising compound may be included in the composition in an amount of between 1% and 50% by weight relative to the weight of the composition. In particular, the composition may comprise the at least one synergising compound when the curable compound polymerises via free radical principles and is a compound selected from the group consisting of compounds including at least one (meth)acrylate functional group, wherein preferably said (meth)acrylate functional group comprises acrylate groups (H₂C=CH-C(=O)-) and methacrylate groups (H₂C=CH(CH₃)-C(=O)-).

The disclosure also provides a process for providing a polymeric composition to extend the shelf life of a food product, the process comprising the steps of:
i) providing at least one curable compound,
ii) adding to said curable compound at least one initiator compound and/or at least one catalyst compound and obtaining a mixture,
iii) adding to said mixture at least one essential oil and mixing to obtain a solution,
iv) polymerising said solution to obtain the polymeric composition.

The step (iv) of polymerising the solution may be conducted by exposing the solution to irradiation with light at a selected wavelength between 200 nm and 600 nm and/or heating.

The disclosure further provides a polymeric composition obtainable by the disclosed process.

The disclosure further relates to a process for prolonging the shelf life of a food product, wherein the process comprises at least one of the following steps:
- applying the composition, preferably in the form of a tag or sticker, to a food product, more preferably a fruit and vegetable product, and/or to a substrate for packaging a food product,
- applying the composition, preferably in the form of a film, to a substrate suitable for packaging a food product, more preferably a fruit and vegetable product, said substrate being most preferably selected from glass, metal, plastic, paper,
- packaging a food product, preferably a fruit and vegetable product, with the composition.

One of the advantages obtained by the technical solution disclosed in the present application relates to the possibility of mixing the essential oils, as antimicrobial agents, in a curable liquid solution intended for creating polymeric compositions with a cross-linking density such as to prevent rapid volatilization of the essential oils and prolong their antimicrobial effect.

### Brief description of the figures

One or more embodiments will be described, purely by way of non-limiting example with reference to the attached figures, listed below.
- Figure 1 shows an example of a polymeric composition obtained in the form of tag;
- Figure 2 shows an example of deposition of the polymer composition to obtain a layer on a substrate;
- Figure 3 shows the results of analyses conducted to demonstrate the effectiveness of the polymeric composition in prolonging the shelf life of a fruit;
- Figure 4 shows photographs of blueberry packages including the disclosed composition in the form of a tag applied to the inner surface of the lid;
- Figure 5 shows a way of applying tags obtained with the disclosed composition to cardboard boxes destined to contain fresh oranges (panels a) and b)). Panels c) and d) show the appearance of oranges packed in a cardboard box without tags and in a cardboard box with tags;
- Figure 6 shows a graph of a quantitative analysis conducted to check the state of preservation of the oranges 21 days after packing them in the cardboard box without tags and in the cardboard box with tags.

### Detailed description

In the following description, numerous specific details are provided to allow a thorough understanding of the embodiments. The embodiments may be implemented without one or more of the specific details, or with other procedures, components, materials, etc. In other cases, well-known structures, materials or operations are not shown or described in detail to avoid obscuring aspects of the embodiments.

Reference throughout this description to "in one embodiment" or "in an embodiment" indicates that a particular function, structure or feature described in relation to the embodiment is included in at least one embodiment. Thus, the appearance of the phrases "in one embodiment" or "in an embodiment" in the various places throughout this description do not necessarily all refer to the same embodiment. Furthermore, particular functions, structures or features may be combined in any suitable way in one or more embodiments. The headings provided herein are for convenience only and do not construe the scope or meaning of the embodiments.

One or more embodiments of the present disclosure provide a composition for prolonging the shelf life of a food product, said composition comprising:
i) a matrix comprising at least one curable compound
ii) at least one essential oil as an antimicrobial agent dispersed in that matrix,
iii) at least one initiator compound and/or at least one catalyst compound.

One of the advantages obtained by the technical solution described in the present application relates to the possibility of mixing essential oils in thermally or photolytically curable liquid solutions by obtaining polymeric compositions with a cross-linking density such as to prevent rapid volatilisation of the essential oils and prolong their antimicrobial effect.

In particular, the cross-linking density of the polymeric composition can be comprised between 60% and 100% of insoluble fraction, calculated according to ASTM D2765 - 01. The term "insoluble fraction" refers to the fraction of polymerised compound and is expressed as weight percentage between the polymeric composition before and after the test. In particular, according to the protocol of the above-mentioned standard, the weight difference between the sample at time zero and after the test is measured. The weight difference provides an indication of the extent of cross-linking. If no weight difference is observed between the sample after the test and the sample before the test, the amount of insoluble fraction is 100%.

During exposure to light and/or thermal energy, photocurable and/or thermocurable compounds begin to react and polymerise due to the interaction between the functional groups by photopolymerisation and/or thermal polymerisation (thermopolymerisation) mechanisms.

The disclosed curable compounds (monomers and oligomers) can be cured by the presence of their functional groups (e.g. methacrylates, acrylates, heterocyclics). These compounds can be photocured or thermocured depending on the type of initiator compound that is used to activate polymerisation. If the initiator compound is activated by light (it refers to a photoinitiator compound), the system comprising the curable compound and the photoinitiator compound is referred to as a photocurable system. If the initiator compound is activated by thermal energy, the system comprising the curable compound and the thermoinitiator compound is referred to as a thermocurable system.

In other words, a compound can be considered photocurable or thermocurable depending on the initiator used, photoinitiator or thermoinitiator, in the preparation of the mixture.

Preferably, the polymer composition comprises at least one photocurable compound, at least one essential oil, at least one photoinitiator compound. Photocurable compounds are compounds that react by photopolymerisation, a process known to be fast, low energy and easy to use.

Preferably, the at least one curable compound of the composition has a molecular weight between 200 g/mol and 10000 g/mol, more preferably greater than 600 g/mol, more preferably greater than 1000 g/mol.

The at least one curable compound may be - as highlighted above - a photocurable compound, a thermocurable compound, combinations thereof.

In particular, the at least one curable compound reacting via a free radical mechanism may be selected from the group consisting of:
- compounds comprising at least one (meth)acrylate functional group, wherein preferably said (meth)acrylate functional group comprises acrylate groups (H₂C=CH-C(=O)-) and methacrylate groups (H₂C=CH(CH₃)-C(=O)-),
- compounds comprising at least one thiol functional group (HS-).

With reference to compounds comprising (meth)acrylate functional groups, the term (meth)acrylate refers to both compounds (monomers and oligomers) comprising methacrylate functional groups (H₂C=CH(CH₃)-C(=O)-) and compounds comprising acrylate functional groups ((H₂C=CH-C(=O)-); such compounds are also characterised by carbon-carbon double bonds (C=C), i.e. ethyl unsaturated groups, which participate in free-radical polymerisation. The crosslinked network is created when (meth)acrylic compounds with at least two functional groups are involved in the photopolymerisation process. However, (meth)acrylic compounds with only one functional group can be used as functional additives to, for example, decrease the viscosity of the composition, increase the final conversion of (meth)acrylate or reduce the polymerisation-inhibiting effect exerted by oxygen.

In one or more embodiments, the at least one curable compound comprising at least one di(meth)acrylate functional group, preferably at least two di(meth)acrylate functional groups, may be selected from the group consisting of: polycaprolactone di(meth)acrylate, glycerol 1,3-diglycerolate di(meth)acrylate, bisphenol a ethoxylate di(meth)acrylate, hexyl (meth)acrylate, isodecyl (meth)acrylate, tert-butyl (meth)acrylate, pentabromobenzyl (meth)acrylate, 2-ethylhexyl (meth)acrylate, methyl 2-(hydroxymethyl) (meth)acrylate, 2-carboxyethyl (meth)acrylate, tetrahydrofurfuryl (meth)acrylate, 1,4-butanediol di(meth)acrylate, polypropylene glycol) di(meth)acrylate, neopentyl glycol di(meth)acrylate, bisphenol a glycerolate di(meth)acrylate, poly(ethylene glycol) di(meth)acrylate, ethylene glycol di(meth)acrylate, di-1,6-hexanediol di(meth)acrylate, polycaprolactone di(meth)acrylate, glycerol 1,3-diglycerolate di(meth)acrylate, bisphenol a ethoxylate di(meth)acrylate, 1,4-butanediol di(meth)acrylate, poly (propylene glycol) di(meth)acrylate, neopentyl glycol di(meth)acrylate, bisphenol a glycerolate di(meth)acrylate, ethoxylated trimethylolpropane methyl ether di(meth)acrylate, trimethylolpropane tri(meth)acrylate, pentaerythritol tetra(meth)acrylate, ethoxylated trimethylolpropane tri(meth)acrylate, propoxylated glycerol tri(meth)acrylate, pentaerythritol tetra(meth)acrylate, propoxylated trimethylolpropane tri(meth)acrylate, and combinations thereof.

In one or more embodiments, compounds comprising at least one (meth)acrylate group can be selected from the group consisting of: methyl (meth)acrylate, butyl (meth)acrylate, ethyl (meth)acrylate, sodium (meth)acrylate, benzyl (meth)acrylate, vinyl (meth)acrylate, octadecyl (meth)acrylate, lauryl (meth)acrylate, isobutyl (meth)acrylate, propargyl, pentafluorophenyl (meth)acrylate, isobornyl (meth)acrylate, ethyl (meth)acrylate, isodecyl (meth)acrylate, tert-butyl (meth)acrylate, pentabromobenzyl (meth)acrylate, 2-ethylhexyl (meth)acrylate, methyl 2-(hydroxymethyl) (meth)acrylate, 2-carboxyethyl (meth)acrylate, tetrahydrofurfuryl (meth)acrylate, poly(ethylene glycol) methyl ether (meth)acrylate, behenyl (meth)acrylate, polydimethylsiloxane (meth)acrylate, octyl (meth)acrylate, decyl (meth)acrylate, trimethylsilyl (meth)acrylate, 2-hydroxyethyl (meth)acrylate, glycidyl (meth)acrylate, 4-hydroxybutyl (meth)acrylate, and combinations thereof.

When the at least one curable compound is a compound comprising at least one thiol functional group (HS-), the composition may comprise at least one further curable compound selected from the group consisting of:
- a compound comprising at least one functional group presenting a carbon-carbon double bond (alkene), preferably a vinyl functional group (H₂C=CH-),
- a compound comprising at least one functional group having a carbon-carbon triple bond (alkyne), e.g. propargyl groups (HC=C-CH₂-).

The composition includes, in addition to the curable compound and the essential oil, at least one compound selected from initiator compound and catalyst compound. In one or more embodiments, the composition comprises a matrix comprising at least one curable compound, at least one essential oil as an antimicrobial agent, at least one initiator compound, preferably selected from photoinitiator compound, thermoinitiator compound, and combinations thereof.

In the case where the composition comprises as a curable compound at least one compound comprising at least one thiol functional group in combination with at least one compound comprising at least one functional group having a carbon-carbon double bond (alkene) such combination is identified in the present disclosure as a "thiol-ene type system". In this case, the polymerisation of the curable compounds may take place, in addition to free radical polymerisation mechanisms, by thiol Michael addition mechanisms without an initiator compound and in the presence of a catalysing compound, such as a strong base, said compound preferably being selected from the group consisting of strong nucleophilic type bases including at least one primary and/or secondary amine group.

In the case where the composition comprises as a curable compound at least one compound comprising at least one thiol functional group in combination with at least one compound comprising at least one functional group having a carbon-carbon triple bond (alkyne) such combination is identified in the present disclosure as a "thiol-yne type system".

The at least one curable compound comprising at least one thiol functional group (HS-) can be selected from the group consisting of trimethylolpropane tris(3-mercaptopropionate) (TMTMP), pentaerythritol tetrakis (3-mercaptopropionate) tris[2-(3-mercaptopropionyloxy) ethyl] isocyanurate, pentaerythritol tetra(3-mercaptopropionate), 2,2'-(ethylenedioxy) diethanethiol, 2-hydroxymethyl-2-methyl-1,3-propanediol tris-(3-mercaptopropionate), ethylene glycol bismercaptoacetate, 1,6-hexanedithiol, 1-hexadecanthinol, 1,8-octanedithiol, 4,4'-bis(mercaptomethyl)biphenyl, 1,4-benzenedimethanediol, benzene-1,2-dithiol, 4,4'-thiobisbenzenethiol, p-terphenyl-4,4'-dithiol, 1,2-ethanedithiol, 3-mercaptopropionic acid, mercaptosuccinic acid, 6-mercaptohexanoic acid, 4-mercaptobenzoic acid, butyl 3-mercaptopropionate, tetra(ethylene glycol) dithiol, 1,8-dimercapto-3,6-dioxo octane, tertiary dodecylmercaptan, and combinations thereof.

The at least one curable compound comprising at least one functional group with at least one carbon-carbon double bond (alkene), (HC=CH), can be selected from the group consisting of: vinyl methyl oxazolidinone, N-vinyl pyrrolidone, N-vinyl caprolactam, N-vinyl imidazole, N-vinyl-N-methylacetamide, ethyl vinyl ether, iso-butyl vinyl ether, cyclohexyl vinyl ether, dodecyl vinyl ether, octadecyl vinyl ether, 1,4-butanediol divinyl ether, diethylene glycol divinyl ether (DVE), triethylene glycol divinyl ether, 1,4-cyclohexanedimethanol, divinyl ether, hydroxybutyl vinyl ether, 3-amino propyl vinyl ether, 1,3,5-triallyl-1,3,5-triazine-2,4,6(1H,3H,SH)-trione, 2,4,6-triallyloxy-1,3,5-triazine, tris[2-(acryloyloxy)ethyl] isocyanurate, trimethylolpropane diallyl ether, allyl glycidyl ether, allyl acetate, allyl alcohol, allyl benzyl ether, allyl phenyl ether, 3-allyloxy-1,2-propanediol, allyl methacrylate, allyl acrylate, allyl heptanoate, 3-[(allyloxy)methyl]-3-ethyloxetane, allyl cyclohexanopropionate, 1,4-cyclohexanedimethanol divinyl ether, vinylterminated polydimethylsiloxane, and combinations thereof.

The at least one compound comprising at least one functional group having at least one carbon-carbon triple bond or alkyne (HC=CH) is glycidyl propargyl ether, propargyl alcohol, 4-methyl-1-heptin-3-ol, N-(5-hexynyl)phthalimide, 4-butanediol dipent-4-in-2-yl carbonate, 2,2-bis[4-(2-hydroxy)ethoxyphenyl]propane dibut-3-in-1-yl carbonate, tricyclo[5.2.1. 02,6] decane-4,8-dimethanol dibut-3-in-1-yl carbonate, propargyl alcohol, methyl propargyl ether, glycidyl propargyl ether, propargyl benzoate, propargyl methacrylate, propargyl-PEG(n)-acid, propargyl-PEG(n)-NHS ester, propargyl-PEG(n)-t-butyl ester, alkyne-ethyl-PEG(n)-t-butyl ester, propargyl-PEG(n)-amine, propargyl-PEG(n)-methylamine, bis-propargyl-PEG(n), and combinations thereof.

In one or more embodiments, the composition may comprise at least one compound curable by an ionic (cationic and anionic) polymerisation mechanism. Such a curable compound may be selected from the group consisting of compounds comprising at least one functional group having a heterocycle, preferably oxirane or oxetane, and compounds comprising at least one carbon-carbon double bond (alkene), preferably at least one vinyl group (H₂C=CH-).

In one or more embodiments, the at least one curable compound comprising at least one functional group having at least one heterocycle may be selected from the group consisting of: 3,4-(epoxycyclohexane)methyl 3,4-epoxycyclohexylcarboxylate, bisphenol a diglycidyl ether, glycidyl (meth)acrylate, 3,4-epoxycyclohexyl methacrylate, tris(4-hydroxyphenyl)methane triglycidyl ether, neopentyl glycol diglycidyl ether, bis[ 4-(glycidyloxy)phenyl]methane, poly(bisphenol a-co-epichlorhydrin), end-capped glycidyl, tris(2,3-epoxypropyl) isocyanurate, 4,4'-methylenbis(n,n-diglycidylaniline), n,n-diglycidyl-4-glycidyloxyaniline, trimethylolethane triglycidyl ether, 1,4-butanediol diglycidyl ether, poly(ethylene glycol) diglycidyl ether, poly(dimethylsiloxane), diglycidyl ether terminated, butyl glycidyl ether, poly(dimethylsiloxane), monoglycidyl ether terminated, methoxypolyethylene epoxide, 1,2,7,8-diepoxyoctane, 1,3-butanediol diglycidyl ether, oxetane-3-methanol 3-(aminomethyl)oxyethane, 3-(methoxymethylene)oxyethane, methyl 2-(oxyethan-3-ylidene)acetate, 2-(methoxycarbonylamino)-2-(oxyethan-3-yl)acetic acid, 3,3'-(oxybis(methylene))bis(3-ethyloxyethane), disubstituted oxyethane (DSO), 3-ethyl-3-hydroxymethyloxyethane, 1,4-bis{[(3-ethyloxyethan-3-yl)methoxy]methyl}benzene, 3-ethyl-3-{[(3-ethyloxyethan-3-yl)methoxy]methyl}oxethane, 3-ethyl-3-[(2-ethylhexyloxy)methyl] oxyethane, 4,4'-bis[(3-ethyl-3-oxyethanyl)methoxy]biphenyl, bis[(3-ethyl-3-oxyethanyl)methyl] isophthalate, (3-ethyl-3-oxyethanyl)methoxymethyl methacrylate, (3-ethyl-3-[(4-hydroxybutoxy)methyl] oxethane and combinations thereof.

In one or more embodiments, the polymer composition may include thermally and photolytically curable compounds with biodegradable characteristics, preferably derived from renewable (biobased) sources.

Preferably, (meth)acrylate compounds derived from renewable sources may be selected from the group consisting of soybean bean oil epoxide (met)acrylate (OSEA), isobornyl (met)acrylate (IBOMA or IBOA), tridecyl (met)acrylate C13-(M)A, tetrahydro furfuryl (met)acrylate, 1,10-decane diol di(met)acrylate, lauryl (met)acrylate, pentaerythritol tetra(met)acrylate, and mixtures thereof. Additional (meth)acrylate compounds derived from renewable sources with biodegradable characteristics are commercially known as Ebecryl 5848, Ebecryl 5849, Ebecryl 5781, Miramer M122, Miramer M320, Genomer 3143, Genomer 3611, Genomer 4293 and Sarbio 5400.

Curable compounds comprising at least one heterocyclic functional group derived from renewable sources (biobased) are typically produced by modification - in order to include a heterocyclic functional group in the plant-based molecule - of plant-derived precursors such as unsaturated plant oils, saccharides, tannins, cardanols, terpenes, rosin, lignin in a manner of. Compounds comprising heterocyclic functional groups of the oxirane (or epoxide) type derived from renewable sources are now commercially available.

Preferably, the curable compounds, both thermocurable and photocurable, having oxirane-type heterocyclic functional groups derived from renewable sources can be selected from the group consisting of: epoxidized soybean bean oil (OSE), epoxidized linseed oil (OSLE), epoxidized castor oil (ORE) and epoxidized oil in general, liquid epoxidized natural rubber (LENR), terpene-maleic ester-type epoxide (TME), diglycidyl ether isosorbide (DGEI), 2,5-bis(hydroxymethyl)furan (BHMF), floroglucinol tris-epoxy, vanillin bis-epoxy, and mixtures thereof. Additional curable compounds with heterocyclic functional groups derived from renewable sources with biodegradable characteristics are commercially known as Cardolite LITE 2513HP, Cardolite NC-513, Cardolite NC-547, Cardolite NC-514, EnviPoxy, GreenPoxy, super sap^{®} one, EpoBiox, Ampro TM BIO, Resoltech^{®} 1800 ECO.

Biologically derived curable compounds comprising at least one thiol functional group, or characterised by carbon-carbon double bond (alkene), e.g. vinyl groups (H₂C=CH-), and/or characterised by carbon-carbon triple bond (alkyne), e.g. propargyl groups (HC≡C-CH₂-), are typically produced by modification of precursors of plant origin, e.g. soybean bean oil, soybean beans, linseed, camelina oil, cardanol and eugenol, lignins.

Some biologically derived compounds comprising at least one functional group characterised by a carbon-carbon double bond (alkene), and/or characterised by a biologically derived carbon-carbon triple bond (alkyne) are commercially available to date. Table 1 lists some commercially available biologically derived (biobased) curable compounds (monomers and oligomers) comprising (meth)acrylate and heterocyclic groups that can be used in the composition subject matter of the invention.

**Table 1**

| **Functional Group Type** | **Substance** | **Trade name** | **CAS N°** | **Mw (g/mol)** | **Origin** |
|---|---|---|---|---|---|
| (meth)acrylate | Epoxidized soybean bean oil (OSEA) | Sarbio 7107; Ebecryl 860; Etecure 6261, Etecure 6263 and Etecure 6265; Miramer PE310; PureOmer 3005; PureOmer 3005F | 91722-14-4 | 1600 | Soybean |
| (meth)acrylatet | Polydimethylsiloxane (meth)acrylate | Tegorad 2800 | Supplier's properties | Supplier's properties | Supplier's properties |
| (meth)acrylate | Poly(ethylene glycol) dimethacrylate | Not specified (NS) | 26570-48-9 | 700 | NS |
| (meth)acrylate | Isobornyl methacrylate(IBOMA) | Sarbio 6105; Genomer 1121M; PureOmer 2012; Visiomer Terra IBOMA; | 7534-94-3 | 222.3 | Pine |
| (meth)acrylate | Isobornyl acrylate (IBOA) | Ebecryl IBOA; Genomer 1121; Sarbio 5102; PureOmer 4012; Visiomer IBOA | 5888-33-5 | 208.30 | Pine |
| (meth)acrylate | Tridecyl methacrylate C13-MA (TDMA) | Visiomer Terra C13-MA; Bisomer C13-MA | 85736-97-6 | 268.0 | Vegetable oil |
| (meth)acrylate | Tetrahydrofurfuryl acrylate(THFA) | --- | 2399-48-6 | 156.2 | Hemicellulose |
| (meth)acrylate | Tetrahydrofurfuryl methacrylate(THFMA) | Visiomer Terra C13-MA; Bisomer C13-MA | 2455-24-5 | 170.2 | Hemicellulose |
| (meth)acrylate | 1,10-decanediol diacrylate | --- | 13048-34-5 | 1700 | NS |
| (meth)acrylate | Pentaerythritol tetraacrylate (PETA) | --- | 9686-89-4 | NB | NS |
| (meth)acrylate | Lauryl acrylate (LA) | LA 1214; Pureomer 4812 | 2156-97-0 | 240.38 | NS |
| (meth)acrylate | Biobased acrylate | Ebecryl 5850 | Supplier's properties | Supplier's properties | Supplier's properties |
| (meth)acrylate | Aliphatic urethane polyester acrylate | Genomer 4293 | Supplier's properties | Supplier's properties | Supplier's properties |
| Heterocyclic | 1,3,5-tris(2,3-epoxypropoxy)benzene) | SP-9S-5-003 | 4223-14-7 | 294.30 | Brown algae |
| Heterocyclic | Vanillin diglycidyl ether | SP-9S-5-005 | 1584677-14-4 | 266.29 | Vanillin |
| Heterocyclic | Epoxidized castor oil | SP-3S-30-005 | 105839-17-6 | Supplier's properties | Castor oil |
| Heterocyclic | Epoxidized oil | SP-3S-30-006 | Supplier's properties | Supplier's properties | Rapeseed oil |
| Heterocyclic | Diglycidyl ether isosorbide (DGEI) | SP-9S-5-004; FI181041 | 13374-44-2 | 258.27 | NS |
| Heterocyclic | Epoxidized linseed oil | Lankroflex; Traquisa | 8016-11-3 | | Linseed oil |

Advantageously, for the composition subject matter of the invention, curable compounds derived from renewable sources, having biodegradable characteristics, and preferably having a molecular weight between 200 and 10000 g/mol, more preferably above 1000 g/mol, are preferred.

In one or more embodiments, the at least one curable compound is present in an amount between 40% and 99.7% by weight of the composition.

The composition comprises at least one essential oil of plant origin as an antimicrobial agent; the essential oil may be selected from the group consisting of essential oils of: balsam fir, silver fir, yarrow, laurel, angelica, bitter and/or sweet orange, basil, benzoin, bergamot, birch, chamomile camphor, cinnamon, cajeput, cardamom, carrot, Atlantic cedar, clove, cypress, lemongrass, coriander, cumin, turmeric, tarragon, Italian helichrysum, eucalyptus, fennel, jasmine, geranium, juniper, frankincense, hyssop, lavender, ho wood, rosewood, lemon, marjoram, melaleuca or tea tree, mandarin, lemon balm, mint, myrrh, neroli, niaouli, oregano, palmarosa, patchouli, black pepper, petit grain, pine, grapefruit, rose, rosemary, clary sage, sandalwood, savory, thyme, exotic verbena, vetiver, ylang-ylang, ginger, and combinations thereof.

In one or more embodiments, the at least one essential oil includes essential oil of mint, citrus, preferably lemon, tea tree. Such oils have a high volatilisation rate under normal conditions of pressure and temperature.

The at least one essential oil may be included in the composition in an amount between 0.1% and 50% by weight of the at least one curable compound.

The composition may comprise at least one initiator compound which may be selected from the group consisting of photoinitiator compounds, thermoinitiator compounds, and combinations thereof.

The composition may also include at least one initiator compound in an amount of between 0.2% and 15% by weight of the composition.

The initiator compounds absorb part of the energy supplied thermally (by heating) or photolytically (by irradiation with UV or visible radiation), creating reactive species (free radicals, cations or anions) which initiate the polymerisation process with the functional groups of the curable compound, e.g. (meth)acrylate, thiol, heterocyclic, as defined in the preceding sections.

Preferably, the composition comprises at least one photocurable compound and at least one photoinitiator compound; the polymerisation process in this case is photolytic (irradiation of UV or visible light) and is commonly known as photopolymerisation. Photopolymerisation can offer significant practical advantages over the thermal polymerisation process, e.g. faster polymerisation, conduction of polymerisation at room temperature requiring low energy requirements, polymerisation can be spatially confined (i.e. confined to particular regions) and activated or deactivated simply by switching the light source on or off. Furthermore, polymerisation initiation rates can be controlled by a combination of light source, light intensity, concentration of initiator compounds (radical, anionic or cationic), temperature, and particular atmospheric conditions (e.g. in the presence of nitrogen gas).

In one or more embodiments, for free-radical photolytic polymerisation systems (for (meth)acrylate and/or thiol-ene, and/or thiol-yne reaction systems), the photoinitiator compound is of the radical type (the active species generated are radicals) and is used in combination with the curable compound to activate the photopolymerisation reaction.

In one or more embodiments, the initiator compounds can, for example, be selected from Norrish type I compounds or Norrish type II compounds (generally classified as photoinitiators). The first group of compounds undergo unimolecular dissociation following irradiation with light, but also - in combination or alternatively - following exposure to thermal energy. In this way, radicals are generated that interact with curable compounds comprising functional groups, e.g. (meth)acrylate groups, leading to polymerisation of the composition. The Norrish type II photoinitiator group of compounds, on the other hand, absorbs light radiation to reach a long-lasting excited triplet state that requires a hydrogen donor from another substance (co-initiator or synergist) to initiate polymerisation. Norrish type II photoinitiators can be used, together with amine-based synergists, to reduce the oxygen inhibition problem and increase the level of functional group conversion and, consequently, increase the surface finish of photocured polymeric objects.

The at least one initiator compound activated mainly by photolytic energy (photoinitiator compound) of Norrish Type I and Type II can be selected from the group consisting of 2-hydroxy-2-methylpropiophenone, 2-hydroxy-4'-(2-hydroxyethoxy)-2-methyl propiophenone, 1-hydroxycyclohexyl phenylketone, 1-[4-(2-hydroxyethoxy)-phenyl]-2-hydroxy-2-methyl-1-propane-1-one, oligo[2-hydroxy-2-methyl-1-[4-(1-methylvinyl)phenyl]propanone] and 2-hydroxy-2-methyl-1-phenylpropanone, oligo[2-hydroxy-2-methyl-1-[4-(1-methylvinyl) phenyl]propanone], 2,2-dimethoxy-2-phenylacetophenone, 2-methyl-1-[4-methylthio)phenyl]2-morpholinopropan-1-one, 2-benzyl-2-dimethylamino-4-morpholinobutyrophenone, 2,4,6-trimethylbenzoyldiphenylphosphine oxide, ethyl (2,4,6-trimethylbenzoyl) phenylphosphinate, phenyl bis(2,4,6-trimethylbenzoyl)phosphine oxide, ethyl(3-benzoyl-2,4,6-trimethylbenzoyl)(phenyl)phosphinate, benzophenone, 4-methylbenzophenone, methyl-2-benzoylbenzoate, 4,4'-bis(diethylamino)benzophenone, 4-benzoyl-4'-methyldiphenyl sulphide, 4-phenylbenzophenone, 2-isopropylthioxanthone, 1-chloro-4-propoxythioxanthone, 2,4-diethylthioxanthone, methylbenzoylformate.

The at least one initiator compound activated primarily by thermal energy (thermoinitiator compound) may be selected from the group consisting of 2,2'-Azobis[2-(2-imidazolin-2-yl)-propane] dihydrochloride, tert-butyl hydroperoxide, di-tert-butyl peroxide, cumene hydroperoxide, dicumyl peroxide, benzoyl peroxide, ammonium persulphate, and combinations thereof.

Advantageously, the composition may comprise at least one polymeric initiator compound having a molecular weight between 100 and 2000 g/mol, preferably greater than 600 g/mol. The advantage in the use of such initiator compounds lies in their size, which is larger than that of conventional initiator compounds; for the application here (also concerning the packaging of foodstuffs), it is indeed important to counteract the migration of unreacted initiator compound molecules to the foodstuff, and to avoid phytotoxicity problems. The use of initiator compounds with the above-mentioned molecular weight can therefore be advantageous in order to limit the migration of molecules through the polymerised matrix network of curable compounds. Commercially available photolytic initiator compounds of this type can be selected from the group consisting of Speedcure 7005, Speedcure 7010 and Speedcure 7010-L, Speedcure XFLM01, Polymeric TPO-L, Genopol BP-2, Genopol TX-2, Genopol AB-2, LoMiCure 450, and combinations thereof.

For the composition subject matter of the present invention, the free radical polymerisation processes are carried out in the presence of air, and thus without special environmental conditions. However, oxygen in the air can inhibit the reactivity of free radicals within the cured composition, leaving traces of unreacted initiator compound molecules and reducing the efficiency of photopolymerisation, i.e. the conversion of (meth)acrylate. In this scenario, the cured object remains partially unreacted, especially on the surface, and the final cross-linking density remains inadequate. In order to counteract the inhibitory effect of oxygen during radical polymerisation, the composition may further comprise at least one synergising compound, wherein said compound preferably comprises at least one amine group.

The synergising compound can be an amine compound (hyperbranched or aliphatic), preferably selected from the group consisting of diethylenetriamine, tris(2-aminoethyl) amine, triethylenetetramine, tetraethylenepentamine, N,N"-di-Z-diethylenetriamine, ethylenediamine, polyoxypropylenediamine, 1-(2-aminoethyl) piperazine, pentaethylenehexamine, 2-ethylhexyl-4-dimethylamino benzoate, ethyl-4-dimethylamino benzoate, N-methyl diethanolamine, poly(ethylenimine) 2-amino pentane and mixtures thereof. Some commercial amine products are e.g. Jeffamine D400, Lupasol FG, Lupasol PR 8515, Lupasol P, Hybrane S2200, Genocure ABD, Genocure EHA, Genocure EPD, Genocure MDEA.

In one or more embodiments of the composition, synergising compounds comprising amines with (meth)acrylic functionality are preferred, so that they can be parts of the polymer chain after the radical polymerisation reaction. More preferably such compounds can be selected from N-[3-(N, N-Dimethylamino)propyl] methacrylamide, 2-(Dimethylamino)ethyl methacrylate, N-[2-(N, N-Dimethylamino)ethyl] methacrylamide, 2-[[(Butylamino)carbonyl]oxy] ethyl acrylate, N-methacrylicol-L-lysine, 2-N-morpholinoethyl methacrylate, 2-(tert-butylamino)ethyl methacrylate, 2-diisopropylaminoethyl methacrylate, N-(3-BOC-aminopropyl) methacrylamide, and combinations thereof.

Additional amine-based synergist compounds with methacrylic and/or acrylic functional groups having a medium to high molecular weight (of at least 600 g/mol) that can be used in the composition of the present disclosure may be selected from the group consisting of Ebecryl 85, Ebecryl 10551, Ebecryl 10552, Ebecryl 10553, Ebecryl LED 03, Speedcure 7040, Genomer 5142, Genomer 5161, Genomer 5271, Genomer 5275, Genomer 5695.

In one or more embodiments, the synergising compound may be between 1% and 50% by weight of the composition.

In one or more embodiments, for ionic polymerisation systems, the initiator compound is preferably cationic and is used in combination with the curing compound to activate the cationic type photopolymerisation reaction.

Common cationic initiator compounds are based on onium salts such as triphenylsulphonium, diazonium, diaryliodonium, dialkylphenacylsulphonium and N-alkoxypyridium, as well as ferrocenium salts and various other metallocene compounds. Onium salts are composed of two entities: a cationic centre consisting of a heteroatom and organic fractions and an inorganic metal complex counteranion. The cationic part of the salt is responsible for its UV absorption properties, and the anionic part, usually BF 4 -, PF 6 -, AsF 6 - and SbF 6 -, controls the strength of the photogenerated acid during photolysis. The nucleophilicity together with the strength of the associated photogenerated proton increases with the size of the counter anion.

Ionic photoinitiator compounds (also used in thermal ionic polymerisation processes) can be selected from the group consisting of diphenyl iodonium hexafluorophosphate, bis(4-methylphenyl) iodonium hexafluorophosphate diphenyl iodonium chloride, bis(4-tert-butylphenyl) iodonium hexafluorophosphate, bis-(4-dodecylphenyl) iodonium hexafluoroantimonate, diphenyl iodonium triflate, triphenylsulphonium triflate, 1-naphthyldiphenylsulphonium triflate, triaryl sulphonium hexafluorophosphate salts, 4-isopropyl-4'-methyldiphenyliodonium tetrakis (pentafluorophenyl)borate, sulphonium, (thiodi-4,1-phenylene)bis(diphenyl-, bis((OC-6-11)-hexafluoroantimonate(1-)), bis(4-(diphenylsulphonium)phenyl)sulphide bis(hexafluorophosphate), Tris f 4-[(4-acetylphenyl)sulphanyl]phenyl}sulphonium hexafluorophosphate, and combinations thereof.

In particular, cationic initiator compounds with a low migratory effect, preferably with a molecular weight above 600 g/mol, more preferably above 1000 g/mol, are preferred. Commercially available photoinitiator compounds with low migratory effect are known under the trade names SpeedCure 937, SpeedCure 939, SpeedCure 976, Speedcure 992, Omnicat 270, Omnicat 432 and combinations thereof.

In one or more embodiments, the composition may further comprise functional additives, preferably selected from the group consisting of ascorbic acid, calcium ascorbate, carbohydrates, sodium chloride, magnesium chloride, potassium bicarbonate, acid malic acid and their combinations.

The disclosure also provides a process for providing a polymeric composition to extend the shelf life of a food product, the process comprising the steps of:
i) providing said at least one curable compound,
ii) adding to said at least one curable compound at least one initiator compound and/or at least one catalyst compound and obtaining a mixture,
iii) adding to said at least one essential oil and mixing to obtain a solution,
iv) polymerising said solution to obtain the polymeric composition.

The step (iv) of polymerising the solution may be conducted by exposing the solution to irradiation with light at a selected wavelength between 200 nm and 600 nm and/or heating.

In one or more embodiments, the viscosity of the solution obtained in step iii) may be between 2000 mPa.s and 40000 mPa.s.

The mixture of step ii) may be obtained by employing a mechanical stirrer, preferably at room temperature. Stirring produces a homogeneous and clear mixture.

The mixing step of step iii) can be conducted by employing a mechanical stirrer, and preferably at room temperature, until the solution becomes homogeneous and clear.

In one or more embodiments, the mixture of step (ii) may be obtained by maintaining the temperature between 40°C and 80°C, preferably at about 50°C, preferably for a period of time between 1 and 12 hours, and then allowed to cool. This condition is preferable when at least one of the curable compounds and the initiator compound are in a solid and/or powder state.

Due to their hydrophobic characteristics, the essential oils exhibit good compatibility with the mixture obtained in step ii) comprising curable compounds, preferably compounds comprising at least one (meth)acrylate functional group, heterocyclic (e.g., oxirane, oxetane), characterised by double carbon-carbon bond (e.g., vinyl), characterised by triple carbon-carbon bond (e.g., propargyl), or thiol, initiator compounds and/or catalyst compounds.

The solution obtained in step iii) may be subjected to step iv) of polymerisation by irradiation and/or heating.

Preferably, the irradiation may be conducted by exposing the solution to a source of light radiation, in particular ultraviolet (UV) and/or visible radiation at a power sufficient to polymerise the system but not so high as to cause the essential oil molecules to dimerise and/or volatilise during the process.

Advantageously, the power of the light radiation source that can be used for light-curing the composition can be comprised between 1 watt and 40 watts, preferably 5 watts.

A lamp can be used as a light source. The intensity of the lamp used to polymerise the solution may be between 1 and 10 mW/cm², preferably 7 mW/cm².

The light source employed to polymerise the solution in step iv) may have an emitted light wavelength of between 200 nm and 600 nm, preferably 385 nm.

Preferably, the polymerisation may be conducted using a power of 5 watts, an emitted light wavelength of the lamp of 385 nm and an intensity of 7 mW/cm².

In one or more embodiments, the step iv) of polymerization may be conducted by exposing the solution to heating between 50°C and 120°C, preferably 100°C for a period of time between 2 hours and 20 hours, preferably 12 hours.

The cross-linking density of the polymeric composition may be between 60% and 100% of insoluble fraction, calculated according to ASTM D2765 - 01. The term "insoluble fraction" means the curable compound fraction of the polymerised composition.

The process may further comprise a step in which at least one synergising compound is added to the solution obtained in step (iii). The synergising compound may be employed wherein the composition comprises, as curable compounds, said compounds comprising at least one (meth)acrylate functional group.

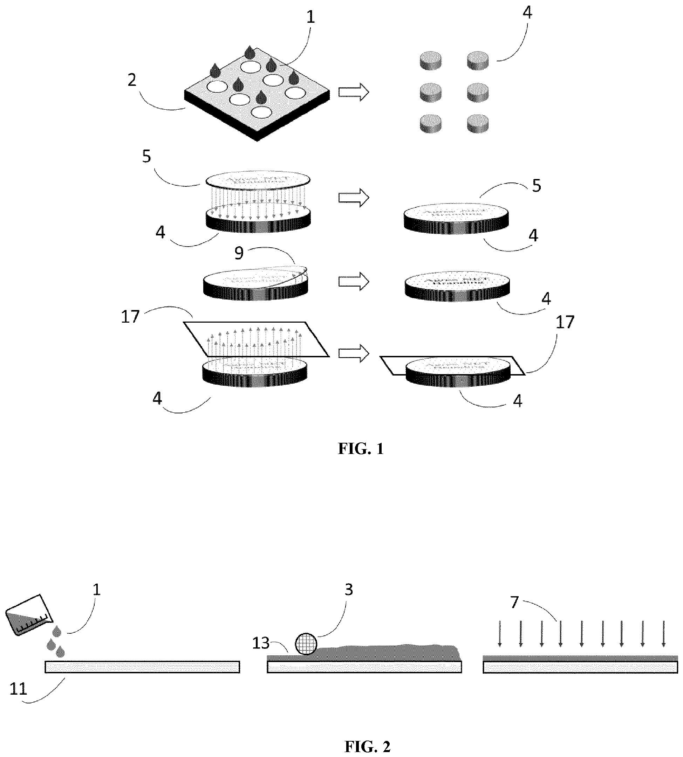

The polymeric composition of the present disclosure may be in the form of a film, tag, sticker (also adhesive) and/or, label. In the following and with reference to Figure 1, the process of producing the composition in the form of a tag is described as an example.

Compositions in the form of film can be used as packaging material for food products; for example, they can be used to make containers, such as trays or boxes, for food products.

The compositions in the form of a tag or label may be applied to a food product, for example on the surface of a fruit, or inserted into the packaging (of glass or plastic, for example) containing the food product.

The compositions of the present disclosure, preferably in film form, may also be used to coat (totally or partially) food packaging materials. The composition in the form of a film may have a thickness of, for example, between 0.01 mm and 5 mm, more preferably between 0.2 mm and 0.5 mm. In the following and with reference to Figure 2, an example of a method for producing the composition in the form of a film applied to a packaging material is described.

The disclosure also provides a method for prolonging the shelf life of a food product, wherein the method comprises at least one of the following steps:
- applying the composition, preferably in the form of a tag or sticker, on a food product, preferably a fruit or vegetable product.
- applying the composition, preferably in the form of a film, on a substrate suitable for packaging a food product, preferably a fruit or vegetable product. The substrate is preferably selected from glass, metal, plastic, or paper.
- packaging a food product, preferably a fruit or vegetable product, with the composition.

When the composition is applied on a substrate suitable for packaging a food product, it can be applied, before the polymerisation step, for example, using spincoating techniques, using an automatic or manual film applicator.

The disclosure consequently also provides a substrate at least partially coated with the polymeric composition. The substrate can vary depending on the intended application and can be an edible substrate (for example, a fruit) or a nonedible substrate (for example, glass, metal, films).

Below are provided some non-limiting examples of different embodiments of the composition disclosed herein.

### Examples

### Method for Producing the Polymeric Composition

Table 2 provides examples of 9 different compositions according to embodiments of the present disclosure, prepared as described below.

**Table 2**

| **Compound type** | Name | **Photocurable** | | | | | | | | **Thermocurable** |
|---|---|---|---|---|---|---|---|---|---|---|
| | | **Es. 1** | **Es. 2** | **Es. 3** | **Es. 4** | **Es. 5** | **Es. 6** | **Es. 7** | **Es. 8** | **Es. 9** |
| | | Weight quantity % | Weight quantity % | Weight quantity % | Weight quantity % | Weight quantity % | Weight quantity % | Weight quantity % | Weight quantity % | Weight quantity % |
| Curable | Epoxidized (meth)acrylic soybean oil (OSEA) | | 70 | | | 40 | | | | |
| Curable | Biobased aliphatic diacrylate (Ebecryl 5849) | | | 84 | | | | | | |
| Curable | Poly (ethylene glycol) diacrylate (PEGDA) | | | | 77 | | | | | |
| Curable | Biobased aliphatic polyester acrylate (Genomer 4293) | | | | | | 60 | | | |
| Curable | Dimethylsiloxane diacrylate (TegoRad 2800) | 88 | | | | | | | | |
| Curable | Diglycidyl ether isosorbide (DGEI) | | | | | | | | | 26 |
| Curable | Epoxidized castor oil (ORE) | | | | | | | | | 55 |
| Curable | Trimethylolpropane tris(3-mercaptopropionate) (TMTMP) | | | | | | | 68 | 59 | |
| Curable | Dietilenglicole divinil etere (DVE-2) | | | | | | | 36 | | |
| Curable | Bis-propargil-PEG9 | | | | | | | | 30 | |
| Curable | Isobornyl methacrylate (IBOMA) | | 15 | | | | | | | |
| Curable | Lauryl acrylate (LA) | | | | 9 | 5 | | | | |
| Curable | Tetrahydrofurfuryl methacrylate *(*THFMA) | | | | | | | | | |
| Curable | Isobornyl acrylate (IBOA) | | | 10 | | | 26 | | | |
| Synergising | Amine modified polyether acrylate (Ebecryl LED03) | 4,3 | 5 | | | | | | | |
| Synergising | Acrylated Oligoamine (Genomer 5695) | | | | 4 | | 6 | | | |
| Initiator | 2,4,6-Trimethylbenzoyldiphenylphosphine oxide (BAPO) | | | 1 | | | | 1 | 1 | |
| Initiator | Ethyl (2,4,6-trimethylbenzoyl) phenylphosphinate (TPO-L) | 0,2 | 1 | | | 5 | 1 | | | |
| Initiator | Polymeric ethyl (2,4,6-trimethylbenzoyl) phenylphosphinate (P-TPO-L) | | | | 3 | | | | | |
| Initiator | Polymeric aminobenzoate derivative(P-AB) | | | | | | 3 | | | |
| Initiator | Polymeric thioxanthone derivative (P-TX) | 2,5 | 4 | | 3 | | | | | |
| Initiator | Polymeric benzophenone derivative(P-BP) | | | | | | | | | |
| Initiator | Diphenyl(methyl)sulfonium tetrafluoroborate | | | | | | | | | 4 |
| Essential oil | Peppermint essential oil (MEO) | 5 | | 2 | | | | | 10 | |
| Essential oil | Lemon essential oil (LEO) | | 5 | 3 | | 50 | | 5 | | 15 |
| Essential oil | Tea tree oil (TTEO) | | | | 4 | | 4 | | | |

The compositions were prepared by first mixing the initiator compounds with curable compounds having functional groups such as (meth)acrylate, heterocyclic (e.g., oxirane, oxetane), characterized by carbon-carbon double bonds (e.g., vinyl group), characterized by carbon-carbon triple bonds (e.g., propargyl), or thiol functional groups, in a mechanical stirrer at room temperature to obtain a homogeneous and clear mixture. Then, essential oils were added to the mixture to obtain a homogeneous and clear solution by mixing with a mechanical stirrer at room temperature. The solution obtained had a viscosity ranging from 2000 mPa.s to 40000 mPa.s.

If any of the compounds were in a solid or powder state, it was dissolved under mechanical agitation by slightly increasing the temperature of the bath to 50°C, then allowed to cool before adding the essential oil mixture. The essential oils used exhibit good compatibility with the mixture of curable compounds and initiator compounds due to their hydrophobic characteristics.

### Method for producing the composition in the form of a tag

Figure 1 illustrates an example of the production process of the composition in the form of a tag (also adhesive). The solution obtained as described and indicated with reference number 1, in a volume of 630 mm³ for each tag, is poured into a silicone mould 2. Subsequently, the mould containing the solution is irradiated in the presence of air using a UV oven equipped with an LED lamp for 1 minute set at 5 watts for a period of time ranging from 15 seconds to 30 minutes, preferably equal to 5 minutes. Each tag can then be extracted from the mould. Each tag 4 (or tag) may have a diameter ranging from 5 mm to 100 mm, preferably between 20 mm and 40 mm. The tag may have a thickness ranging from 0.1 mm to 10 mm, preferably between 1 mm and 5 mm.

After the polymerisation step, the tag 4 can be used as is, for example, inserted into a food product packaging; alternatively, a double-sided adhesive, preferably biodegradable 5, which in turn includes a transparent covering layer 9, can be applied to the tag. In order to be applied to the inner wall of a food packaging (for example, plastic or paper) 17, the upper layer of transparent covering 9 of the double-sided adhesive 5 is removed so that the upper surface of the tag adheres to the food packaging 17.

### Method for producing a food packaging comprising the polymeric composition in the form of a film

As illustrated in Figure 2, the solution 1 is poured onto a substrate 11 made of a material (such as paper or plastic) intended for the production of packaging for fruits and vegetables. Subsequently, a device 3 spreads and distributes the solution 1 onto the substrate to obtain a layer 13 with a homogeneous and constant thickness (ranging from 0.01 to 5 mm, preferably between 0.2 mm and 0.5 mm) on the surface of the substrate 11. The substrate is then exposed to ultraviolet/visible light 7 (with a wavelength ranging from 200 to 600 nm) to achieve the photopolymerisation of the composition in the form of a film. The exposure can be carried out for a period of time ranging from 15 seconds to 30 minutes, preferably equal to 5 minutes.

The same procedure can be used to coat substrates of different sizes, depending on the limitations of the tools used for photopolymerisation (UV/visible lamp), support platform, and device for spreading the composition.

### Efficacy testing of the composition - Example 1

The antifungal properties of the composition produced as described in the preceding sections were tested on citrus fruits, particularly on lemon samples, as follows. Lemons were first disinfected with a 2% volume solution of sodium hypochlorite; after waiting for 5 minutes, the necessary time for the disinfectant to act, the lemons were thoroughly rinsed with drinking water and dried with a disposable paper sheet. Lemons were inoculated with 2×10⁸ colony-forming units (CFU) of *Aspergillus Nigrus* and incubated at a temperature of 30°C for 5 days in closed, sterile glass jars.

Some jars contained the polymeric composition in the form of a tag described in this disclosure, containing peppermint essential oil (MEO) as an antifungal agent in an amount equal to 20% by weight of the composition (MEO samples); other containers contained a polymeric composition similar to the previous one but without the essential oil (control samples). The tags were placed on the inside of the lid before closing the glass jar; during the experiment, there was no direct contact between the tags and the fruits.

The incubation was carried out at a temperature of 30°C to allow mould growth and at the same time accelerate the fruit deterioration process.

At the end of the incubation period, the lemons were immersed and mixed for 3 minutes in 90 ml (10⁻¹ suspension) of peptone water (Oxoid, code CM 9, Basingstoke, England) in a Colworth 400 Stomacher (Seward Medical, London, UK). Decuplicate dilutions were prepared up to 10⁻⁴.

For mould enumeration, 1 mL of each dilution was spread on Cook's Rose Bengal agar plates with chloramphenicol (DRCB, Oxoid, CM 727, Supplement - chloramphenicol SR 78) and incubated at 22°C for 5 days. Each isolated mould colony was counted as 1 colony-forming unit (CFU). The results obtained were expressed in CFU/fruit as the average of the different dilutions.

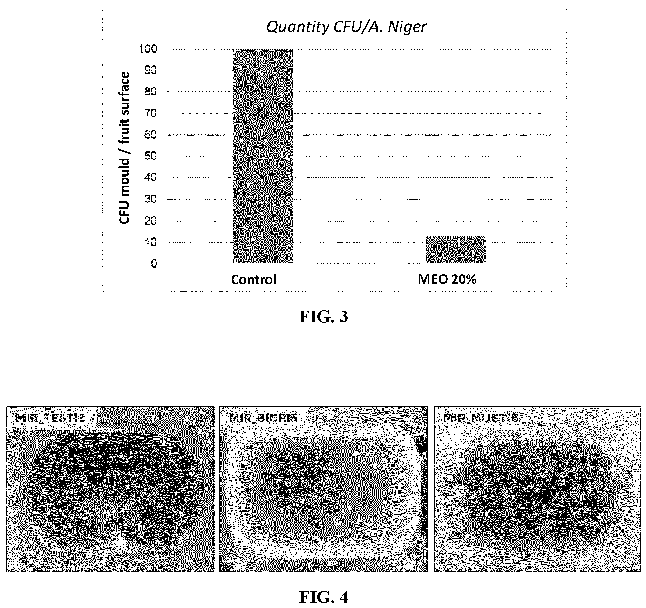

Figure 3 illustrates the results of the quantitative analysis of CFU on the surface of lemons stored in glass jars in the presence of the composition in the form of a tag described in this disclosure (MEO samples) and lemons from control samples (presence of the tag in the glass jar but devoid of essential oils).

The histogram in Figure 3 shows that in the MEO samples, mould growth on the lemons is reduced by 84% compared to what can be observed in the control samples.

### Efficacy testing of the composition - Example 2

Tags obtained as described in the preceding sections with the polymeric composition of the present disclosure indicated with reference number 1 (Ex. 1 in Table 2) were placed inside conventional packages used for the sale of ready-to-eat blueberries by retailers and supermarkets. The main objective was to analyse the growth of microorganisms in packages with and without the presence of the tags.

In particular, the effectiveness of the tags was tested on blueberries by observing the proliferation of microorganisms after 15 days of storage at room temperature in three types of trays for fruit packaging.

The tags were placed on the inner side of the package lids (Figure 4) just before sealing the package; in this way, during the experiment, there was no direct contact between the tag and the fruits. After the storage period, the colonies of mould developed were counted. The results obtained were expressed in colony-forming units per gram (CFU/g).

For the test, three different types of packages were used:
✔ MIR_TEST15: Trays with lids made of recycled polyethylene terephthalate (R-PET).
✔ MIR_BIOP15: Cellulose trays paired with a film of the same material (compostable material).
✔ MIR_MUST15: Paper trays (recyclable) and cellulose film (compostable).
The results obtained are presented in Table 3 below.

**Table 3**

| **Sample** | **Tested product** | **Microrganism** | **Results** (CFU/g) |
|---|---|---|---|
| MIR_TEST15 | Blueberries, after 15 days | Mould | 2×10³ |
| MIR_BIOP15 | Blueberries, after 15 days | Mould | 2×10² |
| MIR_MUST15 | Blueberries, after 15 days | Mould | 1.6×10² |

The most effective antifungal effect was observed for the fruit packaged in cellulose and paper material, MIR_BIOP15 and MIR MUST15, with 2×10² CFU/g and 1.6×10² CFU/g respectively. Whereas for the packaging in recycled PET material, MIR TEST15, the value is higher by an order of magnitude at 2×10³ CFU/g. The guidelines of the Health Directorate of the Piedmont Region Rev. 00/2013 (page 15) establish that ready-to-eat vegetables and fruits (IV range) with a mould concentration lower than 10⁴ CFU/g, it is considered satisfactory. Therefore, the tests conducted with the tags of the present invention have demonstrated effectiveness in reducing microorganism growth after 15 days, yielding values lower by at least one order of magnitude than the limit indicated by the provisions and current regulatory requirements.

### Efficacy testing of the composition - Example 3

Tags obtained as described in the preceding sections with the polymeric composition of the present disclosure indicated with reference number 2 (Ex. 2 in Table 2) were inserted into cardboard boxes for the packaging of fresh fruit intended for commercial distribution.

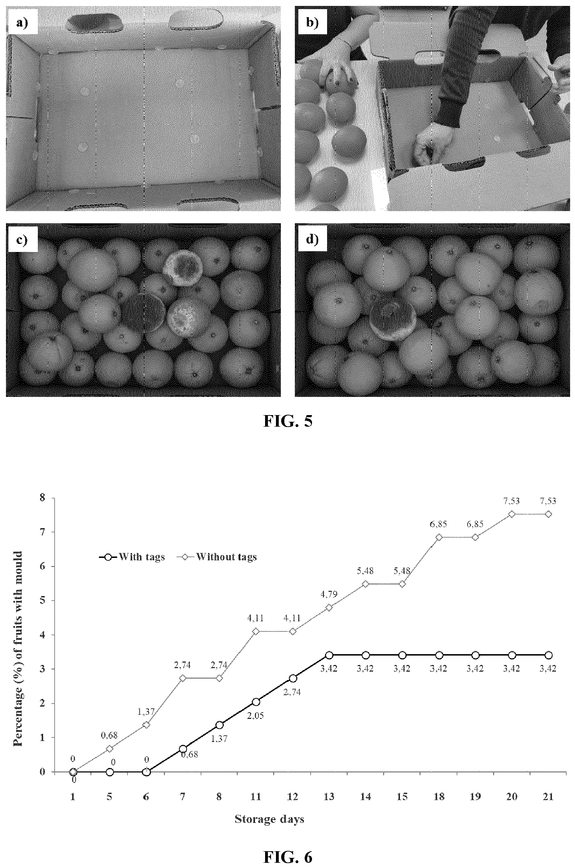

The tests were conducted on 10 boxes each containing 146 oranges. Specifically, 5 boxes without tags were used as control samples, while the remaining 5 boxes had 14 tags evenly distributed on the side walls and the bottom wall (Figure 5, panels a) and b)). The oranges were monitored for 21 days and kept at a temperature of 5°C; panels c) and d) show the appearance of the fruits after 21 days in the absence and presence of tags in the packaging respectively.

Table 4 reports the number of fruits on which mould developed in the two experimental conditions, and the graph in Figure 6 represents the results expressed as a percentage (%).

**Table 4**

| | Numbers of mouldy fruits | |
|---|---|---|
| **Days** | **Without tag** | **With tag** |
| **0-5** | 1 | 0 |
| **6** | 2 | 0 |
| **7** | 4 | 1 |
| **8** | 4 | 2 |
| **11** | 6 | 3 |
| **12** | 6 | 4 |
| **13** | 7 | 5 |
| **14** | 8 | 5 |
| **15** | 8 | 5 |
| **18** | 10 | 5 |
| **19** | 10 | 5 |
| **20** | 11 | 5 |
| **21** | 11 | 5 |

The experimental analysis demonstrated that after 21 days, the number of fruits exhibiting mould was more than double in the box without tags. The presence of tags in the packaging delayed the appearance of mould on the fruits by at least 7 days; already on the first day, the sample without tags showed mould, while in the sample with tags, the presence of mould was observed after the seventh day of observation. After 21 days of observation, in the box without tags, 7.53% of the fruits exhibited mould, while in the box with tags, only 3.42%.

The results thus demonstrate the effectiveness of the composition described herein in prolonging the shelf life of oranges: after 21 days, in the packaging equipped with tags, only 5 out of 146 oranges (3.42%) were mouldy, whereas in the packaging without tags, 11 out of 146 oranges (7.53%) were discarded.

In light of the above, the composition described herein, comprising at least one essential oil dispersed in a matrix of curable compounds whose cross-linking density prevents rapid volatilization and prolongs the antimicrobial effect, has proven to be significantly effective in prolonging the shelf life of the food product.

Compared to known technical solutions, the polymeric composition of the present invention and its uses offer the following advantages:
- the use of curable liquid solutions, preferably photocurable (photopolymers), comprising photocurable compounds with high molecular weight (of at least 1000 g/mol) to produce polymeric compositions with a high cross-linking density that can be used as carriers to slow down the volatilization rate of essential oils. The polymeric compositions are preferably produced via photopolymerisation mechanisms by subjecting liquid solutions to irradiation using, for example, a UV and/or visible radiation lamp with a wavelength ranging from 200 nm to 600 nm. The polymeric composition can serve both as a carrier and as a controller of the volatilization of natural essential oils with antimicrobial properties. The polymeric composition and the substrates coated with it exhibit low migratory effects of the components used, and have good impact resistance, good mechanical properties of flexibility and rigidity, and resistance to moisture and chemical and atmospheric agents;
- the polymeric composition obtained with a high cross-linking density and containing natural essential oils can be used in the food packaging industry to increase the shelf life of food products such as fruits and vegetables; since the cured polymeric composition has antimicrobial properties and good moisture resistance, it can be inserted into a bag or packaging containing fruits or vegetables to extend their shelf life;

- the polymeric composition obtained with a high cross-linking density and containing natural essential oils is preferably prepared via photopolymerisation, a process known to be fast, easy to use, low-cost, and energy-efficient, with high preparation efficiency and a wide range of available starting materials; optionally, such polymeric compositions can be activated by thermal energy for those applications where such activation mode is required; for example, when it is necessary to produce a large quantity of polymeric material and there is no lamp with the suitable size, power, or wavelength.
- the curable compounds used for the subj ect-matter of the present invention can be of various natures and origins, including derived from renewable sources (bio-based), and are readily available in the market.

## Claims

1. Composition for prolonging the shelf life of a food product, said composition comprising:
a) a matrix comprising at least one curable compound,
b) at least one essential oil,
c) at least one initiator compound and/or at least one catalyst compound.

2. Composition according to claim 1, wherein said at least one curable compound is selected from the group consisting of: compounds comprising at least one (meth)acrylate functional group, wherein preferably said (meth)acrylate functional group comprises acrylate groups (H₂C=CH-C(=O)-) and methacrylate groups (H₂C=CH(CH₃)-C(=O)-) and/or wherein said (meth)acrylate group has at least one ethylenically unsaturated functional group; compounds comprising at least one thiol group (HS-); compounds comprising at least one functional group presenting a heterocycle, preferably oxirane or oxetane; compounds comprising at least one functional group presenting a carbon-carbon double bond (alkenes), preferably a vinyl functional group (H₂C=CH-); compounds comprising at least one functional group presenting a carbon-carbon triple bond (alkynes); and relative combinations.

3. Composition according to claim 1 or claim 2, wherein said at least one curable compound is present in a weight percentage ranging from 40% to 99.7% relative to the weight of the composition.

4. Composition according to any one of the preceding claims, wherein said at least one essential oil is included in a weight percentage ranging from 0.1% to 50% relative to the weight of said at least one curable compound.

5. Composition according to any one of the preceding claims, wherein said at least one initiator compound, preferably selected from the group consisting of photoinitiator compound, thermoinitiator compound, and relative combinations, is present in a weight percentage ranging from 0.2% to 15% relative to the weight of the composition.

6. Method for producing a composition according to any one of claims 1 to 5 intended to extend the shelf life of a food product, the method comprising the steps of:
i) providing at least one curable compound,
ii) adding to said at least one curable compound at least one initiator compound and/or at least one catalyst compound to obtain a mixture,
iii) adding to said mixture at least one essential oil and mixing to obtain a solution,
iv) polymerising said solution to obtain the polymeric composition.

7. Method according to claim 6, wherein step iv) of polymerising the solution is carried out by exposing the solution to irradiation with light at a wavelength selected between 200 nm and 600 nm and/or by heating.

8. Method for providing a composition according to any one of claims 1 to 5 intended to extend the shelf life of a food product, wherein the method comprises at least one of the following steps:
- applying the composition, preferably in the form of a tag or label, onto a food product, more preferably a fruit or vegetable product, and/or onto a substrate for packaging a food product,
- applying the composition, preferably in the form of a film, onto a substrate suitable for packaging a food product, preferably a fruit or vegetable product, said substrate being more preferably selected from glass, metal, plastic, paper,
- packaging a food product, preferably a fruit or vegetable product, with the composition.

9. Composition for prolonging the shelf life of a food product obtainable by a method according to any one of claims 6 or 7.

10. Substrate at least partially coated with a composition according to any one of claims 1 to 5.
